(19) Europäisches Patentamt / European Patent Office / Office européen des brevets

(11) **EP 4 427 928 A1**

(12) **EUROPEAN PATENT APPLICATION**
published in accordance with Art. 153(4) EPC

(43) Date of publication:
**11.09.2024 Bulletin 2024/37**

(21) Application number: **22886836.0**

(22) Date of filing: **19.10.2022**

(51) International Patent Classification (IPC):
**B32B 9/00** *(2006.01)*      **B65D 65/40** *(2006.01)*

(52) Cooperative Patent Classification (CPC):
**B32B 9/00; B65D 65/40**

(86) International application number:
**PCT/JP2022/039001**

(87) International publication number:
**WO 2023/074508 (04.05.2023 Gazette 2023/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.11.2021 JP 2021178598**

(71) Applicant: **Toyobo Co., Ltd.**
**Kita-ku**
**Osaka-shi, Osaka 530-0001 (JP)**

(72) Inventors:
• **KASHIWA, Mitsuhiro**
**Inuyama-shi, Aichi 484-8508 (JP)**
• **YAMAZAKI, Atsushi**
**Inuyama-shi, Aichi 484-8508 (JP)**
• **IMAI, Toru**
**Inuyama-shi, Aichi 484-8508 (JP)**

(74) Representative: **Vossius & Partner**
**Patentanwälte Rechtsanwälte mbB**
**Siebertstrasse 3**
**81675 München (DE)**

(54) **MULTILAYER FILM, MULTILAYER BODY AND PACKAGING MATERIAL**

(57) It is provided that a multilayer film that has excellent oxygen and water vapor barrier properties also after a retorting process, and has such adhesiveness as to prevent peeling of layers after a retorting process. A multilayer film comprising: a base film in which a surface layer (C), a base layer (A), and a surface layer (B) are stacked in this order; and an anchor coat layer and an inorganic thin film layer which are stacked on the surface layer (B) of the base film in this order, through another layer or without disposing another layer therebetween, wherein the surface layer (B) is formed of a resin composition including two or more kinds of resins, an amount of the anchor coat layer adhered is less than 0.50 g/m², and a water content of the multilayer film is 0.2 % by mass or less.

EP 4 427 928 A1

**Description**

TECHNICAL FIELD

The present invention relates to a packaging material having excellent gas barrier properties and adhesive strength also after moist heat treatment such as so-called boiling sterilization and retort sterilization. Furthermore, the present invention relates to a multilayer body having excellent material recyclability and a packaging material in which the multilayer body is used.

BACKGROUND ART

A packaging material used for foods, pharmaceutical products, and the like is required to have a property of blocking gas such as oxygen and water vapor, that is, gas barrier properties, in order to inhibit oxidation of protein and fats and oils, maintain taste and freshness, and maintain efficacy of pharmaceutical products. Furthermore, gas-barrier materials used for electronic devices such as solar cells and organic EL, electronic components, and the like are required to have higher gas barrier properties than food packing materials.

To date, a gas-barrier multilayer film in which a metal thin film made of aluminum or the like, or a thin film made of inorganic oxide such as silicon oxide or aluminum oxide is formed on a surface of a plastic base film, has been used for foods that require various gases such as water vapor and oxygen to be blocked, in general. Among them, a gas-barrier multilayer film in which a thin film made of inorganic oxide such as silicon oxide, aluminum oxide, or a mixture thereof is formed is widely used since the film is transparent and allows contents to be checked.

However, the above-described gas-barrier multilayer film locally has a high temperature during forming thereof, and thus, a base material may be damaged, and defects, pinholes, and the like occur in the inorganic thin film layer due to decomposition of a low molecular weight portion or an additive portion such as a plasticizer, degassing, or the like, so that gas barrier properties may be degraded. Furthermore, there is a problem that, during post-processing of the packaging material such as printing, lamination, and bag-making, the inorganic thin film layer may be cracked, and gas barrier properties may be degraded. Particularly, if the inorganic thin film layer is damaged during the above-described process steps, the gas barrier properties are significantly degraded in the succeeding retorting process, and furthermore, interlayer adhesive strength between the inorganic thin film and resin that is in contact with the inorganic thin film is reduced, and the contents may leak.

As a method for reducing degradation of the gas-barrier multilayer film having the inorganic thin film formed therein, a method in which a coating layer formed of various aqueous polyurethane resin or polyester resin, or a mixture of polyurethane and polyester is disposed between a polyester base film and an inorganic thin film layer formed by, for example, vapor deposition, is known (for example, Patent Literature 1).

In addition to the above-described gas-barrier multilayer film, many gas-barrier films each obtained by coating a resin composition on a base film are suggested. Particularly, a coating agent in which polyvinyl alcohol or an ethylene-vinyl alcohol copolymer having high oxygen barrier properties by itself is used, is put into practical use.

Furthermore, a gas-barrier film having a plastic base film coated with a gas-barrier layer in which an inorganic layered compound such as montmorillonite is blended in the above-described vinyl-alcohol-based resin is also suggested. For example, a gas-barrier layer formed of polyvinyl alcohol, a crosslinking agent, and an inorganic layered compound is provided on a base film, or a gas-barrier layer formed of an ethylene-vinyl alcohol-based copolymer, a water-soluble zirconium-based crosslinking agent, and an inorganic layered compound is provided on a base film (see, for example, Patent Literatures 2, 3). In these gas-barrier films, resin is crosslinked, and therefore, the gas-barrier films have moisture resistance, and water resistance during boiling and the like. However, in a case where the gas-barrier films are used for retorting, gas barrier properties and lamination strength have not been sufficiently satisfactory after a retorting process performed in a pressure-applied state at 120 to 130°C.

CITATION LIST

PATENT LITERATURE

[PTL 1] Japanese Laid-Open Patent Publication No. H2-50837
[PTL 2] Japanese Laid-Open Patent Publication No. 2005-349769
[PTL 3] Japanese Laid-Open Patent Publication No. 2008-297527

## SUMMARY OF THE INVENTION

### PROBLEMS TO BE SOLVED BY THE INVENTION

The present invention has been made in view of the problem of the conventional art, and an object of the present invention is to provide a multilayer film that has excellent oxygen and water vapor barrier properties also after a retorting process, and has such adhesiveness as to prevent peeling of layers after a retorting process.

### SOLUTION TO THE PROBLEMS

The inventors of the present invention have found that a film in which good gas barrier properties and adhesiveness are maintained also when a retorting process has been performed can be provided by designing a predetermined multilayer film according to required performance, and have completed the present invention.

That is, the present invention has the following configurations.

1. A multilayer film comprising: a base film in which a surface layer (C), a base layer (A), and a surface layer (B) are stacked in this order; and an anchor coat layer and an inorganic thin film layer which are stacked on the surface layer (B) of the base film in this order, through another layer or without disposing another layer therebetween, wherein the surface layer (B) is formed of a resin composition including two or more kinds of resins, an amount of the anchor coat layer adhered is less than 0.50 g/m$^2$, and a water content of the multilayer film is 0.2 % by mass or less.
2. The multilayer film according to the above 1., wherein the anchor coat layer includes at least one of polyester resin and polyurethane resin.
3. The multilayer film according to the above 1. or 2., wherein the inorganic thin film layer is formed of a metal oxide.
4. The multilayer film according to any one of the above 1. to 3., wherein the base layer (A) is formed of resin containing polyolefin as a main component.
5. A multilayer body comprising an olefin-based sealant layer stacked on the multilayer film according to any one of the above 1. to 4., at a surface opposite to the surface layer (C).
6. The multilayer body according to the above 5., wherein the multilayer body has a lamination strength of 2.0 N/15 mm or more.
7. The multilayer body according to the above 5. or 6., wherein, when (A) represents a value of oxygen permeability obtained by measuring the multilayer body under a 23°Cx65% RH condition, and (B) represents a value of oxygen permeability measured under a 23°Cx65% RH condition after a retorting process in which the multilayer body is held in pressure-applied hot water at a temperature of 130°C is performed for 30 minutes, a barrier value degradation rate after moist heat treatment as represented by an equation indicated below is 150% or less.

$$\text{Barrier value degradation rate (\%) after moist heat treatment} = (B/A) \times 100 \quad \cdots \quad \text{Equation (1)}$$

8. A packaging material comprising at least one of the multilayer film according to any one of the above 1. to 4., or the multilayer body according to the above 5. to 7.

### ADVANTAGEOUS EFFECTS OF THE INVENTION

The inventors of the present invention can provide, by such a technique, the multilayer body for providing necessary performance required such as barrier properties and adhesiveness for packaging materials also after a retorting process.

### DESCRIPTION OF EMBODIMENTS

The present invention will be described below in detail.

A multilayer film that includes: a base film in which a surface layer (C), a base layer (A), and a surface layer (B) are stacked in this order; and an anchor coat layer and an inorganic thin film layer which are stacked on the surface layer (B) of the base film in this order, through another layer or without disposing another layer therebetween, is provided. The surface layer (B) is formed of a resin composition including two or more kinds of resins, an amount of the anchor coat layer adhered is less than 0.50 g/m$^2$, and a water content of the multilayer film is 0.2 % by mass or less.

Each layer of a multilayer body will be described below.

[Base film layer]

(1) Base layer (A)

The base layer of the present invention preferably contains a polyolefin such as polypropylene or polyethylene resin as a main component from the viewpoint of setting a water content in the multilayer film to 0.20 % by mass or less. The "main component" means that a proportion of a specific component to all components is 50 % by mass or more, more preferably 80 % by mass or more, even more preferably 90 % by mass or more, and particularly preferably 95 % by mass or more. As polypropylene used for the layer, polypropylene which is copolymerized with 0.5 mol% or less of ethylene and/or α-olefin having four or more carbon atoms can also be used. Such copolymerized polypropylene is also included in polypropylene of the present invention (hereinafter, referred to as polypropylene). The content of the copolymerization component is preferably 0.3 mol% or less and more preferably 0.1 mol% or less, and complete homopolypropylene containing no copolymerization component is most preferable.

If ethylene and/or α-olefin having four or more carbon atoms are copolymerized in an amount of more than 0.5 mol%, crystallinity and stiffness may be excessively reduced, and a heat shrinkage rate may become large at a high temperature. Such a resin may be blended and used.

The mesopentad fraction ([mmmm]%) as an index of stereoregularity of polypropylene constituting the base layer (A) of the multilayer film of the present invention as measured by 13C- NMR is preferably 98 to 99.5%, more preferably 98.1% or more, and even more preferably 98.2% or more. If the mesopentad fraction of polypropylene is small, the elastic modulus may be reduced, and heat resistance may become insufficient. The upper limit thereof is practically 99.5%.

The mass average molecular weight (Mw) of polypropylene constituting the base layer (A) of the multilayer film of the present invention is preferably 180,000 to 500,000.

If the Mw is less than 180,000, melt viscosity is low, so that stability may be not obtained during casting, and film formability may become poor. If the Mw is more than 500,000, an amount of a component in which the molecular weight is 100,000 or less is 35 % by mass, and heat resistance becomes poor.

The lower limit of the Mw is more preferably 190,000 and even more preferably 200,000. The upper limit of the Mw is more preferably 320,000, even more preferably 300,000, and particularly preferably 250,000.

The number average molecular weight (Mn) of polypropylene constituting the base layer (A) of the multilayer film of the present invention is preferably 20,000 to 200,000.

If the Mn is less than 20,000, melt viscosity is low, so that stability may be not obtained during casting, and film formability may become poor. If the Mn is more than 200,000, heat resistance becomes poor.

The lower limit of the Mn is more preferably 30,000, even more preferably 40,000, and particularly preferably 50,000. The upper limit of the Mn is more preferably 80,000, even more preferably 70,000, and particularly preferably 60,000.

The Mw/Mn as an index of a molecular weight distribution is preferably 2.8 to 10, more preferably 2.8 to 8, even more preferably 2.8 to 6, and particularly preferably 2.8 to 5.4 in polypropylene constituting the base layer (A). The lower limit thereof is preferably 3 or more, and more preferably 3.3 or more.

The molecular weight distribution of polypropylene can be adjusted by polymerizing components having different molecular weights at multiple stages in a series of plants, blending components having different molecular weights off-line with a kneader, blending and polymerizing catalysts having different performances, or using a catalyst that can allow a molecular weight distribution to be obtained as desired.

In a case where the Mw/Mn of polypropylene constituting the base layer (A) of the multilayer film of the present invention is in a range of 2.8 to 5.4, a melt flow rate (MFR; 230°C, 2.16 kgf) is preferably 2 g/10 minutes to 20 g/10 minutes.

The lower limit of the MFR of polypropylene of the base layer (A) is more preferably 3 g/10 minutes, even more preferably 4 g/10 minutes, and particularly preferably 5 g/10 minutes. The upper limit of the MFR of polypropylene constituting the base layer (A) is more preferably 15 g/10 minutes and even more preferably 12 g/10 minutes.

In a case where the Mw/Mn and the MFR of polypropylene constituting the base layer (A) are in these ranges, the polypropylene can also endure hydrothermal treatment, and has good adhesiveness to a cooling roll and excellent film formability.

(2) Surface layer (B)

The surface layer (B) of the present invention preferably contains a polyolefin such as polypropylene or polyethylene resin as a main component from the viewpoint of setting a water content in the multilayer film to 0.20 % by mass or less. The "main component" means that a proportion of a specific component to all components is 50 % by mass or more, more preferably 80 % by mass or more, even more preferably 90 % by mass or more, and particularly preferably 95 % by mass or more. An example in which polypropylene is used will be described below.

The polypropylene resin composition constituting the surface layer (B) of the multilayer film of the present invention is formed of a resin composition including two or more kinds of resins, and preferably has an MFR of 1.0 g/10 minutes to 10.0 g/10 minutes. The lower limit of the MFR of the polypropylene resin composition constituting the surface layer (B) is more preferably 2.0 g/10 minutes, even more preferably 3.0 g/10 minutes, and particularly preferably 4.0 g/10 minutes. The upper limit of the MFR of the polypropylene resin composition constituting the surface layer (B) is more preferably 9.0 g/10 minutes, even more preferably 8.0 g/10 minutes, and particularly preferably 5.5 g/10 minutes. Within this range, film formability is also good, and outer appearance is excellent. If the MFR of the polypropylene resin composition constituting the surface layer (B) is less than 1.0 g/10 minutes, since a difference in viscosity between the base layer (A) and the surface layer (B) is increased in a case where the MFR of polypropylene constituting the base layer (A) is high, non-uniformity (non-uniformity of material) is likely to occur when a film is formed. If the MFR of the polypropylene resin composition constituting the surface layer (B) is more than 10 g/10 minutes, there is a possibility that adhesiveness to a cooling roll becomes poor, air becomes involved, and smoothness is poor, and these cause increase of defects.

As the polypropylene-based resin having a lower MFR, polypropylene copolymerized with ethylene and/or $\alpha$-olefin having four or more carbon atoms, can also be used. Examples of the $\alpha$-olefin having four or more carbon atoms include 1-butene, 1-hexene, 4-methyl·1-pentene, and 1-octene. As another copolymerization component, for example, maleic acid having polarity may be used.

The total amount of ethylene and/or $\alpha$-olefin having four or more carbon atoms, and the other copolymerization component is preferably 8.0 mol% or less. If the total amount is more than 8.0 mol% in copolymerization, whitening of the film may occur and outer appearance may become poor, or stickiness occurs and film formation may become difficult.

Although each of the resins to be blended may be copolymerized in an amount of more than 8.0 mol%, the blended content is preferably 8.0 mol% or less in units of monomers other than propylene.

As the polypropylene-based resin having a higher MFR, the above-described copolymerized polypropylene can be used or homopolypropylene resin can be used.

As the polypropylene-based resin composition constituting the surface layer (B) of the multilayer film of the present invention, resin compositions having different crystallinities are preferably mixed. By mixing polypropylene-based resin compositions having different crystallinities, crystallinity can be partially changed on the film surface, and the surface roughness of the film can be controlled. The hardness of the surface can be controlled so as to be in a desired range, and it is assumed that adhesiveness can be maintained by these effects also after a boiling process or retorting process.

An antiblocking agent to be used can be appropriately selected from inorganic particles such as silica, calcium carbonate, kaolin, and zeolite particles, and organic particles such as acrylic, polymethacrylic, and polystyrene particles. Among them, silica or polymethacrylic particles are particularly preferably used. The average particle size of the anti-blocking agent is preferably 1.0 to 3.0 $\mu$m, and more preferably 1.0 to 2.7 $\mu$m. The measurement method of the average particle diameter as used herein is a method in which a photograph is taken with a scanning electron microscope, Feret's diameters in a horizontal direction are measured using an image analyzer device, and an average value thereof is displayed.

The addition amount of the antiblocking agent is not particularly limited as long as the addition amount of the antiblocking agent into the surface layer (B) and the surface layer (C) is adjusted so that haze, a dynamic friction coefficient, center plane average roughness (SRa), and an air release time are within predetermined ranges.

The wet tension of the surface of the surface layer (B) of the laminated film of the present invention is preferably 38 mN/m or more. The wet tension indicates a numerical value of the surface tension (mN/m) of a mixed liquid reagent determined to wet the film surface, and is related to the wettability of a printing ink and an adhesive. When the wet tension is 38 mN/m or more, adhesion to an adhesive used for lamination with a vapor-deposited film, a coating film, or a film as another member is improved. In order to set the wet tension to 38 mN/m or more, additives such as an anti-static agent and a surfactant are usually used, but these methods have an effect of lowering a surface resistance value, and therefore it is preferable to perform a physicochemical surface treatment such as a corona treatment or a heat treatment.

For example, in the corona treatment, it is preferable to perform discharge in air using a preheating roll and a treatment roll.

(3) Surface layer (C)

The multilayer film of the present invention may have the surface layer (C) on the surface of the base layer (A) on the side opposite to the surface layer (B) side. The surface layer (C) of the present invention preferably contains a polyolefin such as polypropylene or polyethylene resin as a main component from the viewpoint of setting a water content in the multilayer film to 0.20 % by mass or less. The "main component" means that a proportion of a specific component to all components is 50 % by mass or more, more preferably 80 % by mass or more, even more preferably 90 % by mass or more, and particularly preferably 95 % by mass or more.

As polypropylene used for the layer, polypropylene which is copolymerized with 0.5 mol% or less of ethylene and/or α-olefin having four or more carbon atoms can also be used. Such copolymerized polypropylene is also included in polypropylene of the present invention (hereinafter, referred to as polypropylene). The content of the copolymerization component is preferably 0.3 mol% or less and more preferably 0.1 mol% or less, and complete homopolypropylene containing no copolymerization component is most preferable.

If ethylene and/or α-olefin having four or more carbon atoms are copolymerized in an amount of more than 0.5 mol%, crystallinity and stiffness may be excessively reduced, and a heat shrinkage rate may become large at a high temperature. Such a resin may be blended and used.

The surface layer (C) preferably has a surface having center plane average roughness (SRa) of 0.020 μm or more. The center plane average roughness (SRa) is measured by a three-dimensional roughness meter. The center plane average roughness (SRa) of the surface of the surface layer (C) is more preferably 0.022 μm or more, even more preferably 0.025 μm or more, and particularly preferably 0.028 μm or more. When the center plane average roughness (SRa) of the surface of the surface layer (C) is less than 0.020 μm, surface unevenness is small, and the slipperiness of the film, an air release time between the films, and blocking resistance are deteriorated. There are several methods for setting the center plane average roughness (SRa) of the surface of the surface layer (C) within a prescribed range, but the center plane average roughness (SRa) can be adjusted by changing the average particle diameter or the addition amount of the antiblocking agent.

With regard to the center plane average roughness (SRa) of the surface of the surface layer (C) of the laminated body of the present invention, the center plane average roughness (SRa) measured by a three-dimensional roughness meter is preferably 0.040 μm or less.

The polypropylene resin using in the present invention can be obtained by polymerizing raw material propylene using a known catalyst such as a Ziegler-Natta catalyst or a metallocene catalyst. Especially, in order to eliminate heterophilic binding, a Ziegler-Natta catalyst, a catalyst enabling high-stereoregularity polymerization is preferably used.

As the method for polymerizing propylene as a raw material, a known method may be employed. Examples of the known method include a method for performing the polymerization in an inert solvent such as hexane, heptane, toluene, or xylene, a method for performing the polymerization in a liquid monomer, a method for adding a catalyst to a gaseous monomer and performing gas-phase polymerization, and a method for performing the polymerization by combining these methods.

The substrate layer (A) and/or the surface layer (B) and/or the surface layer (C) of the laminated film of the present invention may contain an additive or other resin. Examples of the additive include an antioxidant, an ultraviolet absorber, a nucleating agent, a pressure-sensitive adhesive, an antifogging agent, a flame retardant, and an inorganic or organic filler. Examples of the other resin include a polypropylene resin other than the polypropylene resin used in the present invention, a random copolymer which is a copolymer of propylene and ethylene and/or an α-olefin having 4 or more carbon atoms, and various elastomers. These materials may be sequentially polymerized using a multi-stage reactor, blended with a polypropylene resin with a Henschel mixer, diluted with polypropylene so as to have a predetermined concentration of a master pellet prepared in advance using a melt kneader, or totally melted and kneaded in advance for use. Furthermore, as long as the object of the present invention is not impaired, a corona discharge treatment, a glow discharge treatment, a flame treatment, or a surface roughening treatment may be performed, and a known anchor coating treatment, printing, and decoration and the like may be performed.

In a method for producing the base film of the present invention, a biaxially oriented film is preferably produced, the polypropylene-based resin composition constituting the base layer (A), the polypropylene-based resin composition constituting the surface layer (B), and the polypropylene-based resin composition constituting the surface layer (C) are separately melt-extruded by respective extruders, co-extruded from a die, and cooled by a cooling roll to form an unstretched sheet, and the unstretched sheet is stretched in the machine direction (MD) and the transverse direction (TD), and is thereafter heat-set, thereby obtaining the base film.

The melt-extrusion temperature is preferably about 200 to 280°C. For obtaining the multilayer body having good outer appearance without disturbing the layer in this temperature range, a difference in viscosity (difference in MFR) between the polypropylene material for the base layer (A) and the polypropylene material for the surface layer (B) is preferably set to be 6.0 g/10 minutes or less. If the difference in viscosity is more than 6 g/10 minutes, the layer is likely to become disturbed, resulting in poor appearance. The difference in viscosity is more preferably 5.5 g/10 minutes or less, and more preferably 5.0 g/10 minutes or less. The surface temperature of the cooling roll is preferably 25 to 35°C and more preferably 27 to 33°C.

The lower limit of the stretching ratio in the machine direction (MD) is preferably 3 times and more preferably 3.5 times. If the lower limit is less than the above-described stretching ratio, the film thickness may become non-uniform. The upper limit of the stretching ratio in the MD is preferably 8 times and more preferably 7 times. If the upper limit is more than the above-described stretching ratio, the succeeding TD stretching may not be easily performed. The lower limit of the stretching temperature in the MD is preferably 120°C, more preferably 125°C, and even more preferably 130°C. If the lower limit is lower than the above-described temperature, a mechanical load may be increased, non-uniformity of the thickness may be increased, or the film surface may become rough. The upper limit of the stretching temperature in the MD is preferably 160°C, more preferably 155°C, and even more preferably 150°C. A higher temperature is preferable since dimensional change during moist heat treatment is reduced, and degradation of barrier properties and adhesiveness can be reduced. However, the higher temperature may cause adhesion to a roll and prevent stretching, or may cause the surface to become rough.

The lower limit of the stretching ratio in the transverse direction (TD) is preferably 4 times, more preferably 5 times, and even more preferably 6 times. If the lower limit is less than the above-described stretching ratio, the thickness may become non-uniform. The upper limit of the TD stretching ratio is preferably 20 times, more preferably 17 times, even more preferably 15 times, and particularly preferably 12 times. If the upper limit is more than the above-described stretching ratio, the heat shrinkage rate may become high or breakage may occur during stretching. The preheating temperature in the TD stretching is preferably set to be higher than the stretching temperature by 5 to 15°C for quickly increasing the film temperature to about a stretching temperature. The lower limit of the TD stretching temperature is preferably 150°C, more preferably 155°C, even more preferably 158°C, and particularly preferably 160°C. If the lower limit is lower than the above-described temperature, softening may be insufficient and breakage may occur, dimensional change may be large during moist heat treatment, and barrier properties and adhesiveness may be degraded. The upper limit of the TD stretching temperature is preferably 170°C, more preferably 168°C, and even more preferably 165°C. A higher temperature is preferable for reducing dimensional change. However, if the temperature is higher than the above-described temperature, a low molecular weight component may be melted and recrystallized and orientation may be reduced, and furthermore, the surface may become rough and whitening of the film may occur.

The stretched film is heat-set. The lower limit of the heat-setting temperature is preferably 163°C and more preferably 165°C. If the lower limit is lower than the above-described temperature, dimensional change during moist heat treatment may be large, and barrier properties and adhesiveness may be degraded. Furthermore, long time treatment is required for reducing dimensional change, and productivity may be reduced. The upper limit of the heat-setting temperature is preferably 176°C and more preferably 175°C. If the upper limit is higher than the above-described temperature, the low molecular weight component may be melted and recrystallized, and the surface may become rough and whitening of the film may occur.

The film is preferably relaxed (relaxation) during the heat-setting. The lower limit of the relaxation rate is preferably 2% and more preferably 3%. If the lower limit is less than the above-described rate, dimensional change during moist heat treatment may be large, and barrier properties and adhesiveness may be degraded. The upper limit of the relaxation rate is preferably 10% and more preferably 8%. If the upper limit is more than the above-described rate, non-uniformity of the thickness may be increased.

Furthermore, in order to reduce the dimensional change, the film produced in the above-described process steps may be once wound into a roll, and thereafter annealed off-line.

A biaxially oriented polypropylene film roll of the present invention can be obtained by subjecting the biaxially oriented polypropylene-based multilayer body thus obtained to corona discharge treatment, plasma treatment, flame treatment, or the like as appropriate, and thereafter winding by a winder.

[Anchor coat layer]

In the present invention, an anchor coat layer is disposed on the surface layer (B). By disposing the anchor coat layer, an oligomer or an anti-blocking material can be inhibited from appearing from the polypropylene resin. Furthermore, when another layer is stacked on the anchor coat layer, adhesiveness between the layers can also be enhanced. Particularly, in addition to the adhesiveness, there is a problem that a thin film cannot be formed at a protrusion caused by an uneven surface and barrier properties or the like become poor when an inorganic thin film layer is formed. In addition, by using a material having gas barrier properties for the anchor coat layer itself, gas barrier performance of the multilayer body can also be substantially enhanced. Furthermore, by stacking the anchor coat layer having water resistance, entrance of hot water is prevented, so that degradation of barrier properties, adhesiveness, or the like after a boiling process or retorting process can also be reduced. The anchor coat layer is formed of a material having a high water content since a resin component having polar groups, etc., is introduced in order to ensure necessary adhesion, in many cases. The inventors of the present invention have newly found that the degradation after moist heat treatment can be reduced when a water content of the entire multilayer film is controlled to be a predetermined amount. In order to control the water content of the multilayer film within the suitable range described below, a composition and/or a processing condition which allow adhesion and barrier properties to be exhibited with a small amount of the anchor coat layer adhered as described below need to be adopted.

In the present invention, an amount of the anchor coat layer adhered is preferably 0.01 to 0.50 g/m². Thus, the anchor coat layer can be controlled to be uniform in coating, so that non-uniform coating and defects are reduced in the film. The amount of the anchor coat layer adhered is preferably 0.05 g/m² or more and more preferably 0.10 g/m² or more, and preferably 0.47 g/m² or less and more preferably 0.45 g/m² or less. If the amount of the anchor coat layer adhered is more than 0.50 g/m², the large film thickness may increase a water content in the multilayer film although gas barrier properties are enhanced. Furthermore, the large film thickness may cause blocking in terms of processability. Moreover, recyclability of the film and production cost may be negatively affected. Meanwhile, if the film thickness of the protective layer is less than 0.01 g/m², gas barrier properties and adhesiveness between the layers may not become sufficient.

Examples of the resin composition used for the anchor coat layer of the present invention include urethane-based, polyester-based, acryl-based, titanium-based, isocyanate-based, imine-based, and polybutadiene-based resins to which an epoxy-based, isocyanate-based, melamine-based or other curing agent is added. Furthermore, a crosslinking agent such as a silicon-based crosslinking agent, an oxazoline compound, a carbodiimide compound, or an epoxy compound can be contained.

In particular, the urethane resin is preferably contained because, in addition to the barrier performance due to the high cohesiveness of the urethane bond itself, a polar group interacts with the inorganic thin film layer and has flexibility due to the presence of an amorphous portion, and therefore damage can be suppressed even when a load by moist heat treatment is applied. A polyester resin is also suitable because the same effect can be expected. In the present invention, it is preferable to contain polyurethane containing polyester and isocyanate as a constituent component, and it is more preferable to add a silicon-based crosslinking agent from the viewpoint that water-resistant adhesiveness can be improved.

(1) Urethane Resin

The glass transition temperature (Tg) of the urethane resin used in the present invention is preferably 100°C or higher, more preferably 110°C or higher, and even more preferably 120°C or higher from the viewpoint of improving barrier properties provided by a cohesive force. However, in order to develop an adhesive force, a flexible resin having excellent flexibility and a Tg of 100°C or lower may be mixed for use. In that case, the addition ratio of the flexible resin is preferably within a range of 0 to 80%. The addition ratio is more preferably within a range of 10 to 70%, and even more preferably within a range of 20 to 60%. When the addition ratio is within the above range, both the cohesive force and the flexibility can be achieved, and the barrier properties and the adhesion are improved. When the addition ratio is more than 80%, the film may become too soft, leading in deterioration in the barrier performance.

It is more preferred in the present invention from the viewpoint of the gas barrier performance thereof to use a urethane resin containing, as a main constituent component, an aromatic or aromatic-aliphatic diisocyanate component.

It is particularly preferred that the urethane resin contains, out of such diisocyanate components, a m-xylylene diisocyanate component. The use of this resin allows that an effect of stacking between its aromatic rings further heightens the cohesive force of the urethane bonds, resulting in good gas barrier performance.

In the present invention, the proportion of the aromatic or aromatic-aliphatic diisocyanate(s) in the urethane resin is preferably set, in 100 mol% of the polyisocyanate component (F), to 50 mol% or more (50 to 100 mol%). The total proportion of the aromatic or aromatic-aliphatic diisocyanate(s) is preferably from 60 to 100 mol%, more preferably from 70 to 100 mol%, even more preferably from 80 to 100 mol%. When the total proportion of the aromatic or aromatic-aliphatic diisocyanate(s) is less than 50 mol%, the laminated film may not gain a good gas barrier performance.

(2) Silicon-Based Crosslinking Agent

Various crosslinking agents may be blended in the urethane resin used in the present invention as long as the gas barrier properties are not impaired for the purpose of improving the cohesive force and wet heat resistance adhesiveness of the film. Examples of the crosslinking agent include a silicon-based crosslinking agent, an oxazoline compound, a carbodiimide compound, and an epoxy compound. Among them, the silicon-based crosslinking agent is particularly preferable from the viewpoint that water-resistant adhesiveness to the inorganic thin film layer can be particularly improved by blending the silicon-based crosslinking agent. In addition, an oxazoline compound, a carbodiimide compound, or an epoxy compound or the like may be used in combination as the crosslinking agent.

As the silicon-based crosslinking agent, a silane coupling agent is preferable from the viewpoint of crosslinking between an inorganic substance and an organic substance. Examples of the silane coupling agent include hydrolyzable alkoxysilane compounds such as halogen-containing alkoxysilanes (2-chloroethyltrimethoxysilane, 2-chloroethyltriethoxysilane, 3-chloropropyltrimethoxysilane, 3-chloropropyltriethoxysilane, and other chloroC2-4alkyltriC1-4alkoxysilanes), alkoxysilanes having an epoxy group [2-glycidyloxyethyltrimethoxysilane, 2-glycidyloxyethyltriethoxysilane, 3-glycidyloxypropyltrimethoxysilane, 3-glycidyloxypropyltriethoxysilane, and other glycidyloxyC2-4alkyltriC1-4alkoxysilanes, 3-glycidyloxypropylmethyldimethoxysilane, 3-glycidyloxypropylmethyldiethoxysilane, and other glycidyloxyC2-4alkyldiC 1-4alkoxysilanes, 2-(3,4-epoxycyclohexyl)ethyltrimethoxysilane, 2-(3,4-epoxycyclohexyl)ethyltriethoxysilane, 3-(3,4-epoxycyclohexyl)propyltrimethoxysilane, and other (epoxycycloalkyl)C2-4alkyltriC 1-4alkoxysilanes], alkoxysilanes having an amino group [2-aminoethyltrimethoxysilane, 3-aminopropyltrimethoxysilane, 3-aminopropyltriethoxysilane, and other aminoC2-4alkyltriC1-4alkoxysilanes, 3-aminopropylmethyldimethoxysilane, 3-aminopropylmethyldiethoxysilane, and other aminodiC2-4alkyldiC1-4alkoxysilanes, 2-[N-(2-aminoethyl)amino]ethyltrimethoxysilane, 3-[N-(2-aminoethyl)amino]propyltrimethoxysilane, 3-[N-(2-aminoethyl)amino]propyltriethoxysilane, and other (2-aminoC2-4alkyl)aminoC2-4alkyltriC1-4alkoxysilanes, 3-[N-(2-aminoethyl)amino]propylmethyldimethoxysilane, 3-[N-(2-aminoethyl)amino]propylmethyldiethoxysilane, and other (aminoC2-4alkyl)aminodiC2-4alkyldiC1-4alkoxysilanes], alkoxysilanes having a mercapto group (2-mercaptoethyltrimethoxysilane, 3-mercaptopropyltrimethoxysilane, 3-mercaptopropyltriethoxysilane, and other mercaptoC2-4alkyltriC1-4alkoxysilanes, 3-mercaptopropylmethyldimethoxysilane, 3-mercaptopropylmethyldiethoxysilane, and other mercaptodiC2-4alkyldiC 1-4alkoxysilanes), alkoxysilanes having a vinyl group (vinyltrimethoxysilane, vinyltriethoxysilane, and other vinyltriC1-4alkoxysilanes), and alkoxysilanes having an ethylenic unsaturated bond group [2-(meth)acryloxyethyltrimethoxysilane, 2-(meth)acryloxyethyltriethoxysilane, 3-(meth)acryloxypropyltrimethoxysilane, 3-(meth)acryloxypropyltriethoxysilane, and other (meth)acryloxyC2-4alkyltriC1-4alkoxysilanes, 3-(meth)acryloxypropylmethyldimethoxysilane, 3-(meth)acryloxypropylmethyldiethoxysilane, and other (meth)acryloxydiC2-4alkyldiC1-4alkoxysilanes). These silane coupling agents may be used alone or in combination of two or more thereof. Among them, silane coupling agent having an amino group is preferable.

The amount of the silicon-based crosslinking agent added into the coating layer is preferably 0.05 to 4.00% by mass, more preferably 0.10 to 3.50% by mass, and even more preferably 0.15 to 3.00% by mass. By the addition of the silane coupling agent, the curing of the film proceeds to improve the cohesive force, and as a result, a film having excellent water-resistant adhesiveness is obtained, and an effect of preventing the appearance of oligomers can also be expected. When the addition amount is more than 3.00% by mass, the curing of the film proceeds to improve the cohesive force, but an unreacted portion may also partially occur, resulting in deterioration in adhesiveness between layers. Meanwhile, when the addition amount is less than 0.05% by mass, a sufficient cohesive force may not be obtained.

(3) Polyester Resin

The polyester resin used in the present invention is produced by polycondensation of a polycarboxylic acid component and a polyhydric alcohol component. The molecular weight of the polyester is not particularly limited as long as the polyester can impart sufficient film toughness, coating suitability, and solvent solubility as a coating material, but is 1000 to 50000 in terms of a number average molecular weight, and more preferably 1500 to 30000. A functional group having a polyester terminal is not particularly limited, and may have an alcohol terminal, a carboxylic acid terminal, or both the terminals. However, when an isocyanate-based curing agent is used in combination, it is necessary to use a polyester polyol mainly composed of an alcohol terminal.

The Tg of the polyester used in the present invention is preferably 15°C or higher. This is because when the temperature is lower than 15°C, the resin has adhesion after coating operation, blocking easily occurs, and winding operation after coating is difficult. This is because when the Tg is 15°C or lower, it is difficult to take measures for preventing blocking even under a situation where pressure near a winding core is high due to the addition of an antiblocking agent. The Tg is more preferably 18°C or higher, and even more preferably 25°C or higher.

The polyester used in the present invention is obtained by polycondensation of a polyvalent carboxylic acid component and a polyhydric alcohol component.

[Polyvalent Carboxylic Acid Component]

The polyvalent carboxylic acid component of the polyester used in the present invention contains at least one of ortho-oriented aromatic dicarboxylic acid or an anhydride thereof. When the ortho orientation makes it possible to improve solubility in a solvent to uniformly coat the resin. The uniformly coated protective layer has a small variation in barrier performance, and consequently contributes to the suppression of oligo-whitening. The ortho orientation provides a film having excellent flexibility and an improved interfacial adhesive force, and therefore the damage to the resin due to a wet heat treatment can be reduced, leading to the suppression of oligomers. Examples of aromatic polycarboxylic acid in which carboxylic acid is substituted at an ortho position or an anhydride thereof include orthophthalic acid or an anhydride thereof, naphthalene 2,3-dicarboxylic acid or an anhydride thereof, naphthalene 1,2-dicarboxylic acid or an anhydride thereof, anthraquinone 2,3-dicarboxylic acid or an anhydride thereof, and 2,3-anthracene carboxylic acid or an anhydride thereof. These compounds may have a substituent at any carbon atom of an aromatic ring. Examples of the substituent include a chloro group, a bromo group, a methyl group, an ethyl group, an i-propyl group, a hydroxyl group, a methoxy group, an ethoxy group, a phenoxy group, a methylthio group, a phenylthio group, a cyano group, a nitro group, an amino group, a phthalimide group, a carboxyl group, a carbamoyl group, an N-ethylcarbamoyl group, a phenyl group, or a naphthyl group. The polyester polyol having a content rate of 70 to 100 mol % with respect to 100 mol % of all the polycarboxylic acid components is particularly preferable because the polyester polyol has a high effect of improving barrier properties and excellent solvent solubility, essential as the coating material.

In the present invention, other polyvalent carboxylic acid components may be copolymerized as long as the effects of the invention are not impaired. Specifically, polybasic acids such as succinic acid, adipic acid, azelaic acid, sebacic acid, and dodecanedicarboxylic acid as aliphatic polyvalent carboxylic acid; maleic anhydride, maleic acid, and fumaric acid as unsaturated bond-containing polyvalent carboxylic acid; 1,3-cyclopentane dicarboxylic acid and 1,4-cyclohexanedicarboxylic acid as aliphatic polyvalent carboxylic acid; terephthalic acid, isophthalic acid, pyromellitic acid, trimellitic acid, 1,4-naphthalenedicarboxylic acid, 2,5-naphthalenedicarboxylic acid, 2,6-naphthalenedicarboxylic acid, naphthalic acid, biphenyldicarboxylic acid, diphenic acid and an anhydride thereof, 1,2-bis(phenoxy)ethane-p,p'-dicarboxylic acid, and anhydrides or ester forming derivatives of these dicarboxylic acids as aromatic polyvalent carboxylic acid; and p-hydroxybenzoic acid, p-(2-hydroxyethoxy)benzoic acid and ester-forming derivatives of these dihydroxycarboxylic acids can be used alone or in a mixture of two or more thereof. Among them, succinic acid, 1,3-cyclopentanedicarboxylic acid, isophthalic acid, 2,6-naphthalenedicarboxylic acid, 1,8-naphthalic acid, and difenic acid are preferable from the viewpoint of organic solvent solubility and gas barrier properties.

[Polyhydric Alcohol Component]

The polyhydric alcohol component of the polyester used in the present invention is not particularly limited as long as the polyhydric alcohol component can synthesize a polyester exhibiting performance for gas barrier compensation, but it is preferable to contain a polyhydric alcohol component containing at least one selected from the group consisting of ethylene glycol, propylene glycol, butylene glycol, neopentyl glycol, cyclohexanedimethanol, and 1,3-bishydroxyethylbenzene. Among them, ethylene glycol is most preferably used as a main component because it is estimated that as the number of carbon atoms between oxygen atoms is smaller, a molecular chain does not become excessively flexible and oxygen permeation is less likely to occur.

In the present invention, it is preferable to use the above-described polyhydric alcohol component, but other polyhydric alcohol components may be copolymerized as long as the effect of the present invention is not impaired. Specific examples of diols include 1,5-pentanediol, 3-methyl-1,5-pentanediol, 1,6-hexanediol, methylpentanediol, dimethylbutanediol, butylethylpropanediol, diethylene glycol, triethylene glycol, tetraethylene glycol, dipropylene glycol, and tripropylene glycol, and examples of trihydric or higher alcohols include glycerol, trimethylolpropane, trimethylolethane, tris(2-hydroxyethyl)isocyanurate, 1,2,4-butanetriol, pentaerythritol, and dipentaerythritol. In particular, among trihydric alcohols, a polyester in which glycerol and tris(2-hydroxyethyl)isocyanurate are used in combination is derived from a branched structure and has a moderately high crosslinking density, and thus has good organic solvent solubility and an excellent barrier function, and is particularly preferably used.

Examples of catalysts used in reactions for obtaining the polyester of the present invention include acid catalysts such as tin-based catalysts (such as monobutyl tin oxide and dibutyl tin oxide), titanium-based catalysts (such as tetra-isopropyl-titanate and tetra-butyl-titanate), and zirconia-based catalysts such as tetra-butyl-zirconate. It is preferable to use a combination of the above-described titanium-based catalyst, such as tetra-isopropyl-titanate or tetra-butyl-titanate, which has high activity for the ester reaction, and the above-described zirconia catalyst. The amount of the catalyst to be used is 1 to 1000 ppm, and more preferably 10 to 100 ppm, based on the total mass of a reaction raw material to be used. When the amount is less than 1 ppm, it is difficult to obtain the effect as the catalyst, and when the amount is more than 1000 ppm, an urethanization reaction may be disadvantageously inhibited when an isocyanate curing agent is used.

(4) Isocyanate-Based Curing Agent

In the present invention, when a polyester resin is used as the main agent of the coating agent constituting the anchor coat layer, it is preferable to use an isocyanate-based curing agent as the curing agent to form an urethane resin. In this case, the coating layer becomes a crosslinking system, and therefore heat resistance, abrasion resistance, and rigidity are advantageously improved. Therefore, it is easy to use the present invention for boiling and retort packaging. Meanwhile, there are also problems that the liquid cannot be reused after mixing the curing agent, and a curing (aging) step is required after coating. As advantages, as a simple overcoat varnish, for example, coating production is easily managed without causing a risk of thickening the coating liquid, and the coating liquid can be diluted and reused. In addition, a curing step (so-called aging step) is unnecessary. At this time, the terminal of the polyester to be used can be a polyol, polycarboxylic acid, or a mixture thereof without any problem. Meanwhile, the resin of the coating layer is linear, and therefore heat resistance and abrasion resistance may not be sufficient, or it may be difficult to use the present invention for boiling or retort packaging.

When the curing agent is used for the coating layer, an isocyanate curing system is preferable from the viewpoint of the heat resistance of the film because of coating to the film. In this case, the resin component of the coating material needs to be a polyester polyol. Meanwhile, when an epoxy-based compound is used as the curing agent, polyester polycarboxylic acid is required. In these cases, the coating layer becomes a crosslinking system, and therefore heat resistance, abrasion resistance, and rigidity are advantageously improved. Therefore, it is easy to use the present invention for boiling and retort packaging. Meanwhile, there are also problems that the liquid cannot be reused after mixing the curing agent, and a curing (aging) step is required after coating.

When the polyester has a hydroxyl group, at least a part of the polyisocyanate compound used in the present invention reacts to form an urethane structure, and therefore the resin component is highly polarized, and the gas barrier function can be further enhanced by aggregating polymer chains. When the resin of the coating material is a linear resin, heat resistance and abrasion resistance can be imparted by crosslinking with a trivalent or higher polyisocyanate. The polyisocyanate compound used in the present invention may be any of a diisocyanate, a trivalent or higher polyisocyanate, a low molecular weight compound, and a polymer compound, but it is preferable that an aromatic ring or an aliphatic ring is contained in a part of a skeleton from the viewpoint of the gas barrier improving function. Examples of the isocyanate having an aromatic ring include toluene diisocyanate, diphenylmethane diisocyanate, xylylene diisocyanate, and naphthalene diisocyanate. Examples of the isocyanate having an aliphatic ring include hydrogenated xylylene diisocyanate, hydrogenated toluene diisocyanate, isophorone diisocyanate, norboron diisocyanate, trimers of these isocyanate compounds, and terminal isocyanate group-containing compounds obtained by reacting an excess amount of these isocyanate compounds with, for example, low molecular active hydrogen compounds such as ethylene glycol, propylene glycol, trimethylolpropane, glycerin, sorbitol, ethylenediamine, monoethanolamine, diethanolamine, and triethanolamine, or various polyester polyols, polyether polyols, and high molecular active hydrogen compounds such as polyamides.

A method for applying the resin composition for the anchor coat layer is not particularly limited as long as the film surface is coated to form a layer in the method. For example, a standard coating method such as gravure coating, reverse roll coating, wire bar coating, and die coating can be adopted.

When the anchor coat layer is formed, it is preferable that the resin composition for the anchor coat layer is applied and thereafter heated and dried. At this time, the drying temperature is preferably 90 to 180°C, more preferably 100 to 170°C, and even more preferably 110 to 160°C. If the drying temperature is lower than 90°C, the anchor coat layer may not be sufficiently dried, or film formation for the anchor coat layer may not progress and cohesion and water-resistant adhesiveness may be reduced, so that barrier properties and hand tearability may be degraded. Meanwhile, if the drying temperature is higher than 180°C, heat is excessively applied to the film, the film becomes brittle and piercing strength may be reduced, and shrinkage occurs and processability may deteriorate. Particularly, by performing the drying at 100°C or higher and preferably at 110°C or higher, film formation for the anchor coat layer effectively progresses, and water-resistant adhesiveness can be enhanced. Furthermore, it is also more effective to perform additional heat treatment in a low temperature region as much as possible, separately from the drying, in order to cause film formation for the anchor coat layer to progress.

By performing the additional heat treatment in a low temperature region, the water content in the multilayer film can be controlled to be a predetermined content. The temperature condition for the heat treatment is preferably 25°C to 80°C, more preferably 30°C to 70°C, and even more preferably 35°C to 60°C. If the temperature for the heat treatment is 20°C or lower, the effect of the heat treatment is small, and control of the water content becomes difficult. Meanwhile, if the temperature for the heat treatment is higher than 80°C, heat is excessively applied to the multilayer film, and this may cause poor outer appearance such as wrinkles. Furthermore, although the preferable time for the heat treatment varies depending on an amount of the anchor coat layer adhered and the temperature, the time for the heat treatment is preferably 24 hours or longer, more preferably 48 hours or longer, and even more preferably 72 hours or longer when, for example, the treatment is performed at 40°C.

In the multilayer film of the present invention, a ratio (P1/P2) of a peak intensity (P1) of a peak having an absorption maximum in a region of $1250\pm50$ cm-1 to a peak intensity (P2) of a peak having an absorption maximum in a region of $1070\pm10$ cm-1 in the total reflection infrared absorption spectrum of the anchor coat layer is preferably 1.0 or more and 10.0 or less, more preferably 1.2 or more and 9.0 or less, and even more preferably 1.5 or more and 8.0 or less. The peak in $1250\pm50$ cm-1 is derived from a C-O-C structure derived from an aromatic or an unsaturated aliphatic skeleton, and is used as an index representing a degree of crosslinking of a polyester or polyurethane skeleton. The peak in $1070\pm10$ cm-1 is derived from C-OH, and is used as an index representing an amount of hydroxy groups derived from a polyester or polyurethane skeleton in the anchor coat layer. (P1/P2) represents a ratio of hydroxy groups in a polyester or polyurethane skeleton. In a case where the ratio is in the above-described range, the film has high polarity while the water content is controlled to be a predetermined content, and adhesion between the anchor coat layer and the inorganic thin film layer is enhanced, so that exhibition of gas barrier properties and adhesiveness is maximized also after the moist heat treatment. If (P1/P2) is less than 1.0, an amount of hydroxy groups in the anchor coat layer is large, and, although a force for bonding to the inorganic thin film layer is enhanced, crosslinking does not progress in the anchor coat layer, film formability is reduced, and the anchor coat layer becomes brittle, or many polar groups remain in the anchor coat layer, and a water content may thus be increased. Meanwhile, if (P1/P2) is more than 10.0, an amount of hydroxy groups is small in the anchor coat layer, and film formation for the inorganic thin film layer is roughly performed, and gas barrier properties and adhesiveness may be unlikely to be obtained. In order to set the value of (P1/P2) of the anchor coat layer in the predetermined numerical range, the above-described materials need to be used, and an adhesion amount needs to be the above-described predetermined amount, and, furthermore, a blending ratio among the materials needs to be in the above-described suitable range, and the above-described drying and heat treatment conditions need to be set in combination therewith.

[Inorganic thin film layer]

The multilayer body of the present invention has an inorganic thin film layer. The inorganic thin film layer is preferably a metal oxide layer. A material for forming the metal oxide layer is not particularly limited as long as a thin film can be formed of the material. However, from the viewpoint of gas barrier properties, inorganic oxide such as silicon oxide (silica), aluminum oxide (alumina), and a mixture of silicon oxide and aluminum oxide is preferable. In this composite oxide, as a mixing ratio between silicon oxide and aluminum oxide, a ratio of Al as a mass ratio of a metal component is preferably in a range of 20 to 70 % by mass. If the Al concentration is less than 20 % by mass, water vapor barrier properties may be degraded. Meanwhile, if the Al concentration is more than 70 % by mass, a metal oxide layer tends to be hard, a film may be broken after the moist heat treatment, and gas barrier properties may be degraded. In a case where the Al concentration is 100 % by mass, although water vapor barrier properties become good, the surface tends to be smooth because of a single material, and slipperiness is poor and malfunction (wrinkles, pock marks, etc.,) in processing is likely to occur. In the description herein, silicon oxide represents various silicon oxides such as SiO and $SiO_2$ or mixtures thereof, and aluminum oxide represents various aluminum oxides such as AlO and $Al_2O_3$ or mixtures thereof.

In this mixture, a mixing ratio between silicon oxide and aluminum oxide can be determined by using a monitor for measuring compositions with use of fluorescent X-rays. A to-be-measured object is irradiated with X rays, and an intensity of a characteristic X ray emitted from an atom included in the to-be-measured object is measured and converted to a composition, and a value thereof is outputted. The conversion is based on a calibration curve that is generated by a relationship with the fluorescent X-ray obtained by measuring a to-be-measured object having a known film thickness and composition.

In a case where a plastic base film includes the same atom as an atom included in the inorganic thin film layer, for example, in a case where SiOx as the inorganic thin film layer and silica powder as a lubricant in the plastic film are included, that is, in a case where Si atoms are included in common, films in which inorganic thin film layers having known different film thicknesses are formed on a plastic base film that includes the atoms at the same concentration, are previously formed and measured by the monitor. An unknown film thickness of the inorganic thin film layer can be obtained according to a calibration curve that is generated by obtaining a relational expression between the obtained fluorescent X-ray intensity and the film thickness.

The film thickness of the inorganic thin film layer is generally 1 to 100 nm and preferably 5 to 50 nm. If the film thickness of the inorganic thin film layer is less than 1 nm, it may be difficult to obtain satisfactory gas barrier properties. Meanwhile, if the film thickness is more than 100 nm and excessively large, a commensurate effect of enhancing gas barrier properties cannot be obtained, and the film thickness is rather disadvantageous from the viewpoint of bending resistance and production cost.

A method for forming the inorganic thin film layer is not particularly limited. For example, a known vapor deposition method the examples of which include physical vapor deposition methods (PVD methods) such as a vacuum vapor deposition method, a sputtering method, and an ion plating method, and chemical vapor deposition methods (CVD methods) can be adopted as appropriate. A typical method for forming the inorganic thin film layer will be described below by using a silicon oxide/aluminum oxide-based thin film as an example. For example, in a case where a vacuum vapor deposition method is adopted, a mixture of $SiO_2$ and $Al_2O_3$, a mixture of $SiO_2$ and Al, or the like is preferably used as a vapor deposition raw material. Particles are used as the vapor deposition raw material in general. In this case, the size of each particle is desirably a size that does not change the pressure during vapor deposition, and the particle size is preferably 1 mm to 7 mm. For heating, systems such as resistive heating, high frequency induction heating, electron beam heating, and laser heating can be adopted. It is also possible to adopt reactive vapor deposition in which oxygen, nitrogen, hydrogen, argon, carbon dioxide gas, water vapor, or the like is introduced as a reaction gas or a means such as ozone addition or ion assist is used. Furthermore, a film formation condition such as biasing a body to be vapor-deposited (multilayer body to be vapor-deposited) and heating or cooling the body to be vapor-deposited can also be discretionarily changed. Similarly, the vapor deposition materials, reaction gases, biasing of the body to be vapor-deposited, heating/cooling, and the like can be changed also when a sputtering method or a CVD method is adopted.

[Multilayer film]

A water content of the multilayer film of the present invention is preferably 0.20 % by mass or less, more preferably 0.18 % by mass or less, even more preferably 0.15 % by mass or less, and particularly preferably 0.12 % by mass or less. The lower limit thereof is preferably 0.01 % by mass or more. If the water content is more than 0.20 % by mass, there is tendency that an amount of water that enters during moist heat treatment becomes large, and the inorganic thin film cracks and gas barrier properties and adhesiveness are degraded.

In the description herein, the water content is measured by a heating-drying moisture meter. The measurement method is as described in Examples in detail. In brief, the water content is calculated according to an expression of (amount [g] of water coming out from a sample)/(weight [g] of the sample).

[Protective Layer]

In the present invention, when gas barrier performance is further required or processing such as printing is required, a protective layer can also be provided on the inorganic thin film layer. The inorganic thin film layer is not completely a dense film, and has dotted microscopic deficient moieties. By applying, onto the inorganic thin film layer a specific resin composition for protective layer, that will be described later to form the protective layer, a resin in the resin composition for protective layer invades the deficient moieties of the inorganic thin film layer to produce an advantageous effect of stabilizing the gas barrier performance of the laminated layer. Additionally, by using a material having gas barrier performance in the protective layer itself, the laminated body is also largely improved in gas barrier performance. However, it should be noted that the provision of the protective layer causes a cost increase due to an increase in the number of steps, and an environment load depending on a material to be used. It should also be noted that the protective layer changes physical property values such as surface roughness.

[Multilayer body]

For the multilayer body of the present invention, heat-sealable resin called a sealant is used. The heat-sealable resin layer is disposed on the anchor coat layer side or the inorganic thin film layer side in general but may be disposed on the outer side of the resin film layer (surface on the side opposite to the surface on which the inorganic thin film is formed). The heat-sealable resin layer is formed by an extrusion lamination method or a dry lamination method in general. A thermoplastic polymer for forming the heat-sealable resin layer may be any polymer that can sufficiently exhibit sealant adhesiveness, and polyethylene resins such as olefin-based HDPE, LDPE, and LLDPE, polypropylene resins, ethylene-vinyl acetate copolymers, ethylene-$\alpha$-olefin random copolymers, ionomer resins, etc., can be used. Among them, LLDPE or polypropylene resin having high versatility is particularly preferable from the viewpoint of durability, sealing strength, price, and mono-material. The thickness of the sealant layer is preferably 20 to 100 $\mu$m, more preferably 30 to 90 $\mu$m, and even more preferably 40 to 80 $\mu$m. If the thickness is less than 20 $\mu$m, sufficient sealing strength cannot be obtained, and stiffness is not obtained and handling may be difficult. Meanwhile, if the thickness is more than 100 $\mu$m, stiffness may be high and handleability as a bag may be reduced, and furthermore, price may be high.

The thickness of the entire multilayer body of the present invention is preferably 9 $\mu$m or more and 200 m or less, more preferably 10 $\mu$m or more and 170 $\mu$m or less, even more preferably 12 $\mu$m or more and 150 $\mu$m or less, and particularly preferably 15 $\mu$m or more and 120 $\mu$m or less.

The haze of the multilayer body of the present invention is preferably 5% or less, more preferably 0.2% or more and 5.0% or less, even more preferably 0.3% or more and 4.5% or less, and particularly preferably 0.4% or more and 4.0% or less. Within the above-described range, the multilayer body is easy to use in usage that requires transparency. The haze tends to be poor, for example, in a case where the stretching temperature and the heat setting temperature are excessively high, in a case where a cooling roll has a high temperature and a cooling speed of the unstretched (raw) sheet is low, and in a case where an amount of a low molecular weight component is excessively large. By adjusting them, the haze can be set within the above-described range.

In the multilayer body of the present invention, oxygen permeability under a 23°C×65%RH condition, is preferably 25 cc/m$^2$/d/atm or less, more preferably 20 cc/m$^2$/d/atm or less, and even more preferably 15 cc/m$^2$/d/atm or less. The lower limit of the oxygen permeability is preferably 0.1 cc/m$^2$/d/atm or more. The water vapor permeability under a 40°C×90%RH condition is preferably 3.0 g/m$^2$/d or less, more preferably 2.5 g/m$^2$/d or less, and even more preferably 2.0 g/m$^2$/d or less. The lower limit of the water vapor permeability is preferably 0.1 g/m$^2$/d or more.

In the multilayer body of the present invention, the barrier value degradation rate after moist heat treatment as represented by expression (1) is preferably 150% or less, more preferably 140% or less, and even more preferably 130% or less.

In the multilayer body of the present invention, the lamination strength under a 23°C×65%RH condition is preferably 2.0 N/15 mm or more, more preferably 2.3 N/15 mm or more, and even more preferably 2.6 N/15 mm or more in evaluations in both a dry state and water adhesion described below. If the lamination strength is less than 2.0 N/15 mm, peeling may be caused by load generated in moist heat treatment, barrier properties may be degraded, or the contents may leak. Furthermore, hand tearability may also be degraded.

[Adhesive Layer]

For the adhesive layer used in the present invention, a general-purpose adhesive for lamination can be used. For example, it is possible to use solvent (free) type, aqueous type, and hot melt type adhesives containing poly(ester) urethane-based materials, polyester-based materials, polyamide-based materials, epoxy-based materials, poly(meth)acrylic-based materials, polyethyleneimine-based materials, ethylene-(meth)acrylic acid-based materials, polyvinyl acetate-based materials, (modified) polyolefin-based materials, polybutadiene-based materials, wax-based materials, casein-based materials and the like as a main component. Among these, urethane-based or polyester-based materials are preferable in consideration of heat resistance and flexibility that can follow the dimensional changes of each resin. As a method for laminating the adhesive layer, for example, the adhesive layer can be coated by a direct gravure coating method, a reverse gravure coating method, a kiss coating method, a die coating method, a roll coating method, a dip coating method, a knife coating method, a spray coating method, a fountain coating method, and other methods. The coated amount after drying is preferably 1 to 8 $g/m^2$ in order to exert sufficient adhesive properties. The coated amount is more preferably 2 to 7 $g/m^2$, even more preferably 3 to 6 $g/m^2$. When the coated amount is less than 1 $g/m^2$, it is difficult to paste the entire surface and the adhesive strength decreases. When the coated amount is more than 8 $g/m^2$, it takes time to completely cure the film, unreacted substances are likely to remain, and the adhesive strength decreases.

[Printed Layers]

Furthermore, in the laminated body, at least one or more printed layers, and one or more different plastic resin and/or sheets of paper resin may be laminated between the resin film layer and the heat-sealable resin layer, or the outside thereof.

As a printing ink for forming the printed layer, an aqueous and solvent-based resin-containing printing ink can be preferably used. Examples of the resin used in the printing ink include an acrylic resin, a urethane-based resin, a polyester-based resin, a vinyl chloride-based resin, a vinyl acetate copolymer resin, and a mixture thereof. The printing ink may contain known additives such as an anti-static agent, a light blocking agent, an ultraviolet absorber, a plasticizer, a lubricant, a filler, a coloring agent, a stabilizer, a lubricant, a defoaming agent, a crosslinking agent, an anti-blocking agent, and an oxidation inhibitor. A printing method for providing the printing layer is not particularly limited, and known printing methods such as an offset printing method, a gravure printing method, and a screen printing method can be used. In order to dry the solvent after printing, known drying methods such as hot air drying, hot roll drying, and infrared drying can be used.

The present invention can provide the multilayer film having excellent oxygen barrier properties and water vapor barrier properties after a retorting process, and having high adhesiveness between layers and excellent lamination strength.

EXAMPLES

Next, the present invention will be more specifically described by way of examples. However, the present invention is not limited to the following examples. The film was evaluated by the following measurement methods.

The evaluation methods used for the present invention are as follows.

(1) Production of multilayer body

An unstretched polypropylene film (P1146 manufactured by TOYOBO Co., Ltd.) having a thickness of 70 $\mu$m as heat adhesive resin was adhered onto an inorganic thin film layer of a multilayer film obtained in each of examples and comparative examples, by a dry laminating method, by using a urethane-based two-component curing type adhesive ("TAKELAC A525S" and "TAKENATE A50" manufactured by Mitsui Chemicals, Inc. were blended at a ratio of 13.5:1), and the obtained product was subjected to aging at 40°C for four days, to obtain multilayer bodies of Examples 1 to 4 and Comparative examples 1 to 2. The thickness of each adhesive layer was about 4 $\mu$m after drying.

(2) Thickness ($\mu$m)

The thickness of each layer was measured by cutting the multilayer body of the present invention which was embedded in modified urethane resin, by a microtome, and observing the cross-section of the cut multilayer body through a differential interference microscope.

(3) Amount of anchor coat layer adhered

In each of the examples and the comparative examples, each multilayer body obtained at a stage where the anchor coat layer was stacked on the resin film was used as a sample, a 100 mm × 100 mm test piece was cut out from the sample, the anchor coat layer was wiped with acetone, and an adhered amount was calculated from change of the mass of the film before and after the wiping.

(4) Composition/film thickness of inorganic thin film layer

In each of the examples and the comparative examples, each multilayer body obtained at a stage where the inorganic thin film layer was stacked was used as a sample, and a film thickness and a composition were measured according to a previously prepared calibration curve by using a fluorescent X-ray analyzer ("ZSX100e" manufactured by Rigaku Corporation). Conditions for an excited X-ray tube were 50 kV and 70 mA.

(5) Water content

A water content of the multilayer body obtained in each of the examples and the comparative examples was measured by using a heating-drying moisture meter ("MS-70" manufactured by A&D Company, Limited).
About 5 g of a sample of the multilayer film obtained in each of the examples and the comparative examples was stored for 72 hours or longer in an environment of $25\pm2°C$ and a relative humidity of $65\pm10\%RH$, was thereafter cut so as to be $50\times50$ mm square, and set in a measurement dish, and the weight was measured. The sample weight [g] at this time was represented by (Wa). Thereafter, after heating to 140°C was performed, the sample weight was measured when the weight change became 0.02%/second or less. The sample weight [g] at this time was represented by (Wb). The water content was calculated from the weights obtained at the times by using the following equation (1).

$$(\text{Water content } [\%]) = (Wa - Wb)/(Wa) \times 100 \cdots \text{Equation (1)}$$

Each sample was measured at n=3, and the average value was adopted as the water content.

(6) Lamination strength

The multilayer body produced in the above-described (1) was cut out so as to have a width of 15 mm and a length of 200 mm and used as a test piece, and the lamination strength was measured, under a condition in which the temperature was 23°C and the relative humidity was 65%, by using a TENSILON universal material tester ("TENSILON Type UMT-II-500" manufactured by Toyo Baldwin). In measurement of the lamination strength, the tensile rate was 200 mm/minute, and the multilayer body layer of the multilayer body obtained in each of the examples and the comparative examples, and the heat-sealable resin layer were peeled from each other at a peeling angle of 90°, and the strength was measured in each of a (wet) case of water being dropped to the peeled portion by a dropper and a (dry) case of no water being dropped.
Meanwhile, a retorting process in which the multilayer body produced as described above was held in pressure-applied hot water at a temperature of 130°C was performed for 30 minutes, and, immediately after that, a test piece was cut out, in the same manner as described above, from the laminate multilayer body obtained after the retorting process, and the lamination strength (after the retorting process) was measured in the same manner as described above.

(7) Oxygen permeability

The oxygen permeability of the multilayer body produced in the above-described (1) was measured under an atmosphere in which the temperature was 23 °C and the humidity was 65%RH by using an oxygen permeability measurement device ("OX-TRAN (registered trademark) 1/50" manufactured by MOCON, Inc.) in accordance with the B method of JIS-K7126. The oxygen permeability was measured in the oxygen permeating direction from the surface layer (C) side.
Meanwhile, a retorting process in which the multilayer body for evaluation was held in pressure-applied hot water at a temperature of 130°C was performed for 30 minutes, the multilayer body was thereafter dried at 40°C for 24 hours, and the oxygen permeability (after the retorting process) of the multilayer body obtained after the retorting process was measured in the same manner as described above.

(8) Water vapor permeability

The water vapor permeability of the multilayer body produced in the above-described (1) was measured under an atmosphere in which the temperature was 40°C and the humidity was 90%RH by using a water vapor permeability measurement device ("PERMATRAN-W 3/33MG" manufactured by MOCON, Inc.) in accordance with the B method of JIS-K7129. The water vapor permeability was measured in the water vapor permeating direction from the surface layer (C) side.

Meanwhile, a retorting process in which the multilayer body for evaluation was held in pressure-applied hot water at a temperature of 130°C was performed for 30 minutes, the multilayer body was thereafter dried at 40°C for 24 hours, and the water vapor permeability (after the retorting process) of the multilayer body obtained after the retorting process was measured in the same manner as described above.

(9) Lamination strength degradation rate

A value represented by the following equation (2) with respect to the values obtained by the measurement in the above-described (6) was set as the lamination strength degradation rate.

Lamination strength degradation rate (%)=(lamination strength before the retorting process - lamination strength after the retorting process)/(lamination strength before the retorting process)×100

(10) Barrier value degradation rate

The multilayer film according to claim 5 or 6, in which, when (A) represents a value of oxygen permeability measured under a 23°Cx65% RH condition, and (B) represents a value of oxygen permeability measured under a 23°Cx65% RH condition after a retorting process in which the multilayer film was held in pressure-applied hot water at a temperature of 130°C was performed for 30 minutes, a barrier value degradation rate after moist heat treatment as represented by the following equation (3) was 150% or less, with respect to the values obtained by the measurement in (7) and (8).

$$\text{Barrier value degradation rate (\%) after moist heat treatment} = (B/A) \times 100 \cdots \text{Equation (3)}$$

(11) Total reflection infrared absorption spectrum of anchor coat layer

In each of the examples and the comparative examples, the total reflection infrared absorption spectrum was measured, by total reflection absorption infrared spectroscopy, for the surface of the anchor coat layer of the multilayer film alone as obtained at a stage where the anchor coat layer was stacked on the base film, by using an infrared spectrometer ("ALPHA" manufactured by BRUKER). A peak intensity (P1) of a peak having an absorption maximum in a region of 1250±50 cm-1 and a peak intensity (P2) of a peak having an absorption maximum in a region of 1070±10 cm-1 were obtained, and the intensity ratio (P1/P2) was calculated. Each peak intensity was calculated from a peak height connecting perpendicularly between the base line at which the absorbance was zero and each peak top.

[Production of base film layer]

Tables 1 to 3 indicate details of raw materials of the resins used for producing the following base films, film forming conditions, and raw material blending ratios.

[Table 1]

| Polypropylene-based resin | PP-1 | PP-2 | PP-3 |
|---|---|---|---|
| Raw material monomer | Propylene | Propylene | Propylene, Ethylene |
| Resin stereoregularity (mesopentad fraction (%)) | 98.7 | 98.4 | Not measurable |
| Ethylene copolymerization amount (mol%) | 0.0 | 0.0 | 3.0 |
| MFR (g/10 minutes, 230°C, 2.16 kgf) | 7.6 | 3.0 | 7.0 |

(continued)

| Polypropylene-based resin | PP-1 | PP-2 | PP-3 |
|---|---|---|---|
| Molecular weight (Mn) | 67,500 | 79,400 | 80,000 |
| Molecular weight (Mw) | 270,000 | 312,000 | 220,000 |
| Molecular weight distribution (Mw/Mn) | 4.0 | 3.9 | 2.7 |
| DSC melting peak temperature (°C) | 168.0 | 163.9 | 125.3 |
| DSC melting peak area (J/g) | 105.2 | 98.6 | 64.3 |

[Table 2]

| Film forming condition | a | b |
|---|---|---|
| Melted resin temperature (°C) | 250 | 250 |
| Cooling roll temperature (°C) | 30 | 30 |
| Machine direction stretching ratio (times) | 4.5 | 4.5 |
| Machine direction stretching temperature (°C) | 125 | 135 |
| Transverse direction stretching ratio (times) | 8.2 | 8.2 |
| Transverse direction stretching preheating temperature (°C) | 168 | 173 |
| Transverse direction stretching temperature (°C) | 155 | 164 |
| Heat-setting temperature (°C) | 165 | 171 |
| Transverse direction relaxation rate (%) | 6.7 | 6.7 |

[Table 3]

| | | | | OPP-1 | OPP-2 |
|---|---|---|---|---|---|
| Baselayer (A) | Raw material | PP-1 | weight% | 0.00 | 100.00 |
| | | PP-2 | weight% | 100.00 | 0.00 |
| | | Thickness | μm | 17.7 | 17.7 |

(continued)

|  |  |  |  |  | OPP-1 | OPP-2 |
|---|---|---|---|---|---|---|
| Surface layer (B) | Raw material |  | PP-2 | weight% | 43.2 | 43.2 |
|  |  |  | PP-3 | weight% | 52.0 | 52.0 |
|  |  | Anti-blocking-agent-containing masterbatch | Ratio | weight% | 4.8 | 4.8 |
|  |  |  | Product name | - | FTX0627G | FTX0627G |
|  |  |  | Anti-blocking agent | - | silica particles | silica particles |
|  |  |  | Average particle size | μm | 2.7 | 2.7 |
|  |  |  | Content of anti-blocking agent | weight ppm | 50000 | 50000 |
|  |  |  | MFR of polypropylene resin | g/10 minutes, 230°C, 2.16 kgf | 3 | 3 |
|  |  | Content of anti-blocking agent |  | weight ppm | 2400 | 2400 |
|  | Thickness |  |  | μm | 1.3 | 1.3 |
|  | Surface treatment |  |  |  | corona treatment | corona treatment |
| Surface layer (C) | Raw material |  | PP-1 | weight% | 0.0 | 93.6 |
|  |  |  | PP-2 | weight% | 93.6 | 0.0 |
|  |  | Anti-blocking-agent-containing masterbatch | Ratio | weight% | 6.4 | 6.4 |
|  |  |  | Product name | - | FTX0627G | FTX0627G |
|  |  |  | Anti-blocking agent | - | silica particles | silica particles |
|  |  |  | Average particle size | μm | 2.7 | 2.7 |
|  |  |  | Content of anti-blocking agent | weight ppm | 50000 | 50000 |
|  |  |  | MFR of polypropylene resin | g/10 minutes, 230°C, 2.16 kgf | 3 | 3 |
|  |  | Content of anti-blocking agent |  | weight ppm | 3200 | 3200 |
|  | Thickness |  |  | μm | 1.0 | 1.0 |
|  | Surface treatment |  |  |  | No treatment | No treatment |
| Blending amount in film |  |  | PP-1 | weight% | 0.00 | 93.18 |
|  |  |  | PP-2 | weight% | 95.99 | 2.81 |
|  |  |  | PP-3 | weight% | 3.38 | 3.38 |
|  |  | Anti-blocking-agent-containing masterbatch |  | weight% | 0.63 | 0.63 |
|  |  | Content of anti-blocking agent |  | ppm | 316 | 316 |
| Film forming condition (see Table 2) |  |  |  |  | a | b |

(OPP-1)

For the base layer (A), 100.0 weight% of polypropylene homopolymer PP-2 indicated in Table 1 was used. For the surface layer (B), 43.2 weight% of polypropylene homopolymer PP-2 indicated in Table 1, 52.0 weight% of ethylene-copolymerized polypropylene polymer PP-4 indicated in Table 1, and 4.8 weight% of an anti-blocking-agent-containing masterbatch FTX0627G were blended and used. At this time, the melt flow rate (g/10 minutes) of the polypropylene-based resin composition constituting the surface layer (B) was 5.1.

For the surface layer (C), 93.6 weight% of polypropylene homopolymer PP-2 indicated in Table 1, and 6.4 weight% of an anti-blocking-agent-containing masterbatch FTX0627G were blended and used.

The raw material resin of the base layer (A), the raw material resin of the surface layer (B), and the raw material resin of the surface layer (C) were melted at 250°C by using a 45 mm extruder, a 25 mm extruder, and a 20 mm extruder, respectively, co-extruded from a T-die into a sheet-like shape, and cooled and solidified so as to bring the surface layer (B) into contact with a 30°C cooling roll, and thereafter stretched 4.5 times at 125°C in the machine direction (MD). Subsequently, in a tenter, both ends of the obtained product in the film width direction (TD) were held by a clip, and the obtained product was preheated at 168°C and thereafter stretched 8.2 times at 155°C in the transverse direction (TD) and heat-set at 165°C while being relaxed by 6.7% in the transverse direction (TD). The film forming condition at this time was defined as a film forming condition a.

Thus, a biaxially oriented polypropylene-based film having a structure of the surface layer (B)/the base layer (A)/the surface layer (C) was obtained.

The surface of the surface layer (B) of the biaxially oriented polypropylene-based film was subjected to corona treatment by using a corona treatment machine manufactured by Softal Corona & Plasma GmbH in a condition of an applied current value: 0.75A, and thereafter wound by a winder. The thickness of the obtained film was 20 $\mu$m (thicknesses of the surface layer (B)/the base layer (A)/the surface layer (C) were 1.3 $\mu$m/17.7 $\mu$m/1.0 $\mu$m).

(OPP-2)

For the base layer (A), the polypropylene homopolymer PP-1 indicated in Table 1 was used.

For the surface layer (B), 43.2 weight% of polypropylene homopolymer PP-2 indicated in Table 1, 52.0 weight% of ethylene-copolymerized polypropylene polymer PP-4 indicated in Table 1, and 4.8 weight% of an anti-blocking-agent-containing masterbatch FTX0627G were blended and used. For the surface layer (C), 93.6 weight% of polypropylene homopolymer PP-1 indicated in Table 1, and 6.4 weight% of an anti-blocking-agent-containing masterbatch FTX0627G were blended and used.

The raw material resin of the base layer (A), the raw material resin of the surface layer (B), and the raw material resin of the surface layer (C) were melted at 250°C by using a 45 mm extruder, a 25 mm extruder, and a 20 mm extruder, respectively, co-extruded from a T-die into a sheet-like shape, and cooled and solidified so as to bring the surface layer (B) into contact with a 30°C cooling roll, and thereafter stretched 4.5 times at 135°C in the machine direction (MD). Subsequently, in a tenter, both ends of the obtained product in the film width direction (TD) were held by a clip, and the obtained product was preheated at 173°C and thereafter stretched 8.2 times at 164°C in the transverse direction (TD) and heat-set at 171°C while being relaxed by 6.7% in the transverse direction (TD). The film forming condition at this time was defined as a film forming condition b.

Thus, a biaxially oriented polypropylene-based film having a structure of the surface layer (B)/the base layer (A)/the surface layer (C) was obtained.

The surface of the surface layer (B) of the biaxially oriented polypropylene-based film was subjected to corona treatment by using a corona treatment machine manufactured by Softal Corona & Plasma GmbH in a condition of an applied current value: 0.75A, and thereafter wound by a winder. The thickness of the obtained film was 20 $\mu$m (thicknesses of the surface layer (B)/the base layer (A)/the surface layer (C) were 1.3 $\mu$m/17.7 $\mu$m/1.0 $\mu$m).

(PET)

An ester film E5100 manufactured by TOYOBO Co., Ltd. and having a thickness of 12 $\mu$m was used.

[Production of anchor coat layer]

A method for producing the anchor coat layer used in each of the examples and the comparative examples will be described below.

[Coating liquid 1]

In a solution in which 0.25 parts by mass of a silane coupling agent; N-2-(aminoethyl)-3 aminopropyltrimethoxysilane ("KBM-603" manufactured by Shin-Etsu Chemical Co., Ltd.) was dissolved in 1.48 parts by mass of acetone, 4.07 parts by mass of isocyanate; trimethylolpropane adduct of meta-xylylene diisocyanate ("TAKENATE D-110N" manufactured by Mitsui Chemicals, Inc.: solid content of 75%) was mixed, and the obtained product was stirred for ten minutes by using a magnetic stirrer. The obtained liquid preparation was diluted with 69.55 parts by mass of methyl ethyl ketone and 14.03 parts by mass of 1-methoxy-2-propanol (hereinafter, referred to as PGM), and 10.62 parts by mass of polyester resin (manufactured by DIC Corporation; DF-COAT GEC-004C: solid content of 30%) was further added thereto to obtain a target coating liquid 1.

[Coating liquid 2]

To a mixture of 42.83 parts by mass of purified water and 20.00 parts by mass of isopropanol, 6.67 parts by mass of a commercially available meta-xylylene-group-containing urethane resin dispersion ("TAKELAC (registered trademark) WPB341" manufactured by Mitsui Chemicals, Inc.; solid content of 30%), and 28.00 parts by mass of a commercially available polyester urethane resin dispersion ("HYDRAN (registered trademark) AP-80" manufactured by DIC Corporation; solid content of 25%) were added, and the obtained product was stirred for ten minutes by using a magnetic stirrer. To the obtained liquid preparation, 2.50 parts by mass of a carbodiimide-based crosslinking agent ("CARBODILITE SV-02" manufactured by Nisshinbo Chemical Inc.; solid content of 40%) was further added to obtain a target coating liquid 2.

[Coating liquid 3]

To 90 parts by mass of purified water, 10 parts by mass of completely saponified polyvinyl alcohol resin (trade name: G polymer OKS8049Q manufactured by The Nippon Synthetic Chemical Industry Co., Ltd. (saponification degree of 99.0% or more, average degree of polymerization of 450) was added, and the obtained product was heated to 80°C while being stirred, and thereafter stirred for about one hour. Thereafter, the obtained product was cooled to normal temperature, and thus, a substantially transparent polyvinyl alcohol solution (PVA solution) having a solid content of 10% was obtained. To a mixed solution of 35.00 parts by mass of purified water and 15.00 parts by mass of 2-propanol, 50.00 parts by mass of the PVA solution was mixed to obtain a target coating liquid 2.

[Formation of inorganic thin film layer]

A method for producing the inorganic thin film layer used in each of the examples and the comparative examples will be described below.
A composite oxide layer of silicon dioxide and aluminum oxide was formed on the anchor coat layer by an electron beam vapor deposition method. Particulate $SiO_2$ (purity of 99.9%) and $Al_2O_3$ (purity of 99.9%) having a size of about 3 mm to 5 mm were used as a vapor deposition source. In the film (inorganic thin film layer/anchor coat layer-containing film) thus obtained, the inorganic thin film layer ($SiO_2/Al_2O_3$ composite oxide layer ) had a film thickness of 13 nm. The composition of the composite oxide layer was $Al_2O_3/SiO_2$ (mass ratio)=30/70.

(Example 1)

The OPP-1 used as the base film, and the coating liquid 1 used as the anchor coat layer were applied onto the surface layer (B) of the resin film by a gravure roll coating method, and dried at 130°C for ten seconds. At this time, an amount of the anchor coat layer adhered was 0.40 $g/m^2$. Thereafter, post-heating treatment was performed at 40°C for two days, and the inorganic thin film layer was thereafter stacked in the above-described method to obtain a target multilayer film.

(Example 2)

A target multilayer film was obtained in the same condition as in Example 1 except that the resin film was changed to the OPP-2.

(Example 3)

A target multilayer film was obtained in the same condition as in Example 1 except that an amount of the anchor coat layer adhered was changed to 0.20 g/m$^2$.

(Example 4)

A target multilayer film was obtained in the same condition as in Example 1 except that a composition of the inorganic thin film layer was changed to $Al_2O_3/SiO_2$ (mass ratio)=40/60.

(Example 5)

A target multilayer film was obtained in the same condition as in Example 1 except that the coating liquid 2 was used for the anchor coat layer.

(Comparative example 1)

A target multilayer film was obtained in the same condition as in Example 1 except that the coating liquid 3 was used for the anchor coat layer.

(Comparative example 2)

A target multilayer film was obtained in the same condition as in Example 1 except that the base film was changed to PET.
As described above, the multilayer films were produced. Furthermore, the multilayer bodies were produced with the obtained multilayer films as described above in (1). Table 4 indicates configurations and results of various evaluations for the multilayer films and the multilayer bodies.

[Table 4A]

| | | | Unit | Example 1 | Example 2 | Example 3 | Example 4 | Example 5 | Comparative example 1 | Comparative example 2 |
|---|---|---|---|---|---|---|---|---|---|---|
| Multilayer film | Base film | Base material (A) | - | OPP-1 | OPP-2 | OPP-2 | OPP-2 | OPP-2 | OPP-2 | PET |
| | Anchor coat layer | Kind | - | Coating liquid 1 | Coating liquid 1 | Coating liquid 1 | Coating liquid 1 | Coating liquid 2 | Coating liquid 3 | - |
| | | Drying temperature | °C | 130 | 130 | 130 | 130 | 130 | 120 | - |
| | | Adhesion amount | g/m$^2$ | 0.40 | 0.40 | 0.20 | 0.40 | 0.40 | 0.40 | - |
| | | IR peak — 1250±50 cm$^{-1}$ (P1) | - | 0.08 | 0.08 | 0.07 | 0.08 | 0.05 | 0.01 | 0.17 |
| | | IR peak — 1070±10 cm$^{-1}$ (P2) | - | 0.04 | 0.04 | 0.04 | 0.04 | 0.03 | 0.03 | 0.04 |
| | | (P1/P2) | - | 1.8 | 1.9 | 1.9 | 1.9 | 1.7 | 0.3 | 4.4 |
| | Inorganic thin film layer | Alumina/silica | wt% | 30/70 | 30/70 | 30/70 | 40/60 | 30/70 | 30/70 | 40/60 |
| | | Thickness | nm | 15 | 15 | 15 | 15 | 15 | 15 | 15 |
| | Water content | 140°C weight change | % | 0.12 | 0.08 | 0.07 | 0.10 | 0.08 | 0.25 | 0.44 |

[Table 4B]

| | | | | Unit | Example 1 | Example 2 | Example 3 | Example 4 | Example 5 | Comparative example 1 | Comparative example 2 |
|---|---|---|---|---|---|---|---|---|---|---|---|
| Multilayer body | Before retorting process | Oxygen permeability | | cc/m$^2$·day·atm | 0.9 | 1.4 | 2.9 | 1.7 | 4.2 | 0.2 | 1.3 |
| | | Water vapor permeability | | g/m$^2$·day | 0.6 | 0.4 | 0.4 | 0.4 | 1.7 | 1.9 | 0.8 |
| | | Lamination strength | dry | N/15mm | 3.0 | 4.7 | 4.4 | 5.0 | 3.9 | 2.5 | 4.9 |
| | | | wet | N/15mm | 3.0 | 4.3 | 4.1 | 4.6 | 3.8 | 0.4 | 3.5 |
| | After retorting process | Oxygen permeability | | cc/m$^2$·day·atm | 1.1 | 1.1 | 2.0 | 1.7 | 4.5 | 0.8 | 7.6 |
| | | Water vapor permeability | | g/m$^2$·day | 2.3 | 0.7 | 0.6 | 0.6 | 1.9 | 3.5 | 1.9 |
| | | Lamination strength | dry | N/15mm | 2.6 | 4.2 | 4.3 | 4.2 | 2.6 | 1.5 | 2.6 |
| | | | wet | N/15mm | 2.6 | 3.9 | 4.2 | 3.8 | 2.6 | 0.2 | 2.0 |
| | Degradation rate | Oxygen permeability | | % | 122 | 77 | 68 | 95 | 107 | 400 | 585 |
| | | Water vapor permeability | | % | 383 | 190 | 166 | 156 | 112 | 184 | 238 |
| | | Lamination strength | dry | % | 13 | 9 | 1 | 18 | 33 | 40 | 47 |
| | | | wet | % | 13 | 10 | -3 | 18 | 32 | 50 | 43 |

INDUSTRIAL APPLICABILITY

The present invention can provide the multilayer film having excellent oxygen and water vapor barrier properties also after a retorting process, and having such adhesiveness as to prevent peeling of layers after the retorting process.

**Claims**

1.   A multilayer film comprising:

a base film in which a surface layer (C), a base layer (A), and a surface layer (B) are stacked in this order; and an anchor coat layer and an inorganic thin film layer which are stacked on the surface layer (B) of the base film in this order, through another layer or without disposing another layer therebetween, wherein the surface layer (B) is formed of a resin composition including two or more kinds of resins, an amount of the anchor coat layer adhered is less than 0.50 g/m$^2$, and a water content of the multilayer film is 0.2 % by mass or less.

2.   The multilayer film according to claim 1, wherein the anchor coat layer includes at least one of polyester resin and polyurethane resin.

3.   The multilayer film according to claim 1 or 2, wherein the inorganic thin film layer is formed of a metal oxide.

4.   The multilayer film according to any one of claims 1 to 3, wherein the base layer (A) is formed of resin containing polyolefin as a main component.

5.   A multilayer body comprising an olefin-based sealant layer stacked on the multilayer film according to any one of claims 1 to 4, at a surface opposite to the surface layer (C).

6.   The multilayer body according to claim 5, wherein the multilayer body has a lamination strength of 2.0 N/15 mm or more.

7.   The multilayer body according to claim 5 or 6, wherein, when (A) represents a value of oxygen permeability obtained by measuring the multilayer body under a 23°C×65% RH condition, and (B) represents a value of oxygen permeability measured under a 23°Cx65% RH condition after a retorting process in which the multilayer body is held in pressure-applied hot water at a temperature of 130°C is performed for 30 minutes, a barrier value degradation rate after moist heat treatment as represented by an equation indicated below is 150% or less.

Barrier value degradation rate (%) after moist heat treatment $= (B/A) \times 100 \quad \cdots \quad$ Equation (1)

8.  A packaging material comprising at least one of the multilayer film according to any one of claims 1 to 4, or the multilayer body according to claims 5 to 7.

## INTERNATIONAL SEARCH REPORT

| International application No. |
| --- |
| **PCT/JP2022/039001** |

**A. CLASSIFICATION OF SUBJECT MATTER**

*B32B 9/00*(2006.01)i; *B65D 65/40*(2006.01)i
FI:   B32B9/00 A; B65D65/40 D

According to International Patent Classification (IPC) or to both national classification and IPC

**B. FIELDS SEARCHED**

Minimum documentation searched (classification system followed by classification symbols)

B32B1/00-43/00; B65D65/40

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2021/176948 A1 (TOPPAN PRINTING CO., LTD.) 10 September 2021 (2021-09-10) claims, paragraphs [0030]-[0033], [0039]-[0043], [0066], [0090]-[0092], [0103], examples 1-13 | 1-6, 8 |
| A | | 7 |
| A | WO 2014/157652 A1 (TOPPAN PRINTING CO., LTD.) 02 October 2014 (2014-10-02) claims, paragraphs [0006], [0044]-[0045], examples 1-5 | 1-8 |
| A | JP 2002-301787 A (MITSUBISHI CHEMICALS CORP) 15 October 2002 (2002-10-15) claims, example 10 | 1-8 |
| A | JP 7-329258 A (TORAY IND INC) 19 December 1995 (1995-12-19) claims, paragraphs [0005]-[0006], [0008]-[0009], [0013], examples 1-4 | 1-8 |
| A | JP 2008-230153 A (DAICEL CHEM IND LTD) 02 October 2008 (2008-10-02) claims, paragraphs [0031]-[0048], [0064], [0070], [0080], examples 1-3 | 1-8 |

☐ Further documents are listed in the continuation of Box C.     ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **14 December 2022** | **27 December 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/039001**

| Patent document cited in search report | | | Publication date (day/month/year) | Patent family member(s) | | | Publication date (day/month/year) |
|---|---|---|---|---|---|---|---|
| WO | 2021/176948 | A1 | 10 September 2021 | CN | 115175815 | A | |
| WO | 2014/157652 | A1 | 02 October 2014 | US claims, paragraphs [0009], [0054]-[0055], examples 1-5 EP CN TW | 2016/0017479 2979858 105121154 201444687 | A1 A1 A A | |
| JP | 2002-301787 | A | 15 October 2002 | US claims, example 10 EP | 2001/0016260 905174 | A1 A2 | |
| JP | 7-329258 | A | 19 December 1995 | (Family: none) | | | |
| JP | 2008-230153 | A | 02 October 2008 | (Family: none) | | | |

Form PCT/ISA/210 (patent family annex) (January 2015)

**EP 4 427 928 A1**

## REFERENCES CITED IN THE DESCRIPTION

**Patent documents cited in the description**

- JP H250837 A
- JP 2005349769 A
- JP 2008297527 A